# EUROPEAN PATENT APPLICATION

(11) **EP 4 485 594 A1**
(43) Date of publication of application: **01.01.2025**
(21) Application number: 24171958.2
(22) Date of filing: 23.04.2024
(51) Int. Cl.: H01M 10/04, H01M 10/658, H01M 50/293

(54) **DEVICE AND METHOD FOR ATTACHING A FLAME-RETARDANT SHEET TO A BATTERY MODULE**

(30) Priority: 26.06.2023 KR 20230082094
(71) Applicant: SK On Co., Ltd., Seoul 03161 (KR)
(72) Inventor: CHOI, Eun Seo, 34124 Daejeon (KR); KANG, Hyeong Seon, 34124 Daejeon (KR); YUN, Jung Jin, 34124 Daejeon (KR); YUN, Seok Hui, 34124 Daejeon (KR); JO, Jae Min, 34124 Daejeon (KR); JI, Seok Hwan, 34124 Daejeon (KR); CHOI, Jun Yong, 34124 Daejeon (KR)
(74) Representative: Stolmár & Partner Patentanwälte PartG mbB

(57) **Abstract**

A flame-retardant sheet attaching device is disclosed. The flame-retardant sheet attaching device may include a first pressurizing device configured to move in a first direction and apply pressure to a flame-retardant sheet, and a second pressurizing device configured to move in the first direction, the second pressurizing device having at least a portion inserted into a groove of the flame-retardant sheet. The flame-retardant sheet may be configured to move, based on the movement of the second pressurizing device, in a second direction, perpendicular to the first direction. The first pressurizing device may be configured to restrict the movement of the flame-retardant sheet in the first direction, when the flame-retardant sheet moves in the second direction.

## Description

### BACKGROUND

### 1. FIELD

The present disclosure relates to a flame-retardant sheet attaching device and a flame-retardant sheet attaching method. More specifically, the present disclosure relates to an attachment device and attachment method for attaching a flame retardant sheet to a battery module.

### 2. DESCRIPTION OF RELATED ART

Unlike primary batteries, secondary batteries may be charged and discharged, and thus may be applied to devices within various fields such as digital cameras, mobile phones, notebook computers, hybrid vehicles, and electric vehicles.

Lithium secondary batteries have been manufactured as pouch-type battery cells having flexibility, prismatic battery cells having rigidity, or cylindrical can-type battery cells. A plurality of battery cells may be stacked to form a cell assembly. The cell stack may be accommodated in a module housing to form a battery module. In addition, a plurality of battery modules may be accommodated in a pack housing to form a battery pack.

### SUMMARY

A flame-retardant sheet may be used to prevent the transfer of flames or gas generated in the battery module. For example, the flame-retardant sheet may be attached to a case of the battery module . However, when a flame-retardant sheet having an inclined surface is attached to a component, the flame-retardant sheet may have reduced alignment accuracy.

The disclosed technology can be implemented in some embodiments to provide a device and method for attaching a flame-retardant sheet in which internal heat transfer of a battery pack is capable of being delayed. For example, heat transfer between battery modules may be reduced by the flame-retardant sheet.

The disclosed technology can be implemented in some embodiments to provide a device and method for attaching a flame-retardant sheet in which alignment accuracy is capable of being increased.

A battery module manufactured using the device and method for attaching a flame-retardant sheet according to the disclosed technology may be widely applied in the field of green technology, such as electric vehicles, battery charging stations, and other battery-utilizing solar power generation schemes, wind power generation schemes, or the like. In addition, the battery module manufactured using the device and method for attaching a flame-retardant sheet according to the disclosed technology may be used in eco-friendly electric vehicles, hybrid vehicles, and the like, to prevent climate change by suppressing air pollution and greenhouse gas emissions.

A flame-retardant sheet attaching device may include a first pressurizing device configured to move in a first direction and apply pressure to a flame-retardant sheet, and a second pressurizing device configured to move in the first direction, the second pressurizing device having at least a portion inserted into a groove of the flame-retardant sheet. The flame-retardant sheet may be configured to move, based on the movement of the second pressurizing device, in a second direction, perpendicular to the first direction. The first pressurizing device may be configured to restrict the movement of the flame-retardant sheet in the first direction, when the flame-retardant sheet moves in the second direction.

The first pressurizing device may be formed to have a roller or spherical shape. The first pressurizing device may be configured to rotate, when the flame-retardant sheet moves in the second direction.

The flame-retardant sheet may include a cover portion having a first end and a second end opposite to the first end, a first inclined portion extending from the first end, and a second inclined portion extending from the second end. The cover portion may comprise a first side surface extending from the first inclined portion to the second inclined portion, and a second side surface extending from the first inclined portion to the second inclined portion, the second side surface opposite to the first side surface. The roller may include a first roller configured to be in contact with the first side surface, and a second roller configured to be in contact with the second side surface.

The groove may include a first groove formed in the first side surface, and a second groove formed in the second side surface. The second pressurizing device may include a first insertion portion configured to be inserted into the first groove, and a second insertion portion configured to be inserted into the second groove.

The first pressurizing device may include a support plate, and pressurizing portions protruding from opposite ends of the support plate. The pressurizing portions may comprise a pressurizing surface configured to pressurize the flame-retardant sheet.

The first pressurizing device may include an accommodation recess at least partially surrounded by the support plate and the pressurizing portions, the accommodation recess configured to accommodate the second pressurizing device.

The first roller may include a plurality of first rollers, and the second roller may include a plurality of second rollers. The first insertion portion may be positioned between the plurality of first rollers, and the second insertion portion may be positioned between the plurality of second rollers.

The device may further include an unloading device configured to position the flame-retardant sheet on an upper portion of a battery module.

The device may further include an attachment head configured to attach the flame-retardant sheet to a battery module, after the first pressurizing device and the second pressurizing device are driven.

The first pressurizing device may be configured to align a position of the flame-retardant sheet in the first direction. The second pressurizing device may be configured to align a position of the flame-retardant sheet in the second direction.

A flame-retardant sheet attaching method may include a first alignment process of aligning a position of a flame-retardant sheet in a first direction using a first pressurizing device, a second alignment process of aligning a position of the flame-retardant sheet in a second direction, perpendicular to the first direction, using a second pressurizing device, and an attachment process of attaching the flame-retardant sheet to a battery module.

The first alignment process may include an operation of allowing the first pressurizing device to be in contact with a side surface of the flame-retardant sheet and providing pressure to the flame-retardant sheet in the first direction.

The second alignment process may include an insertion operation of moving the second pressurizing device in the first direction and inserting the second pressurizing device into a groove of the flame-retardant sheet.

The second alignment process may include a sliding operation in which the flame-retardant sheet is moved in the second direction, based on a force of the second pressurizing device provided in the groove.

The first pressurizing device may be configured to restrict the movement of the flame-retardant sheet in the first direction, when the flame-retardant sheet moves in the second direction.

According to an embodiment of the disclosed technology, alignment accuracy for an object (for example, a flame-retardant sheet) having an inclined portion may be improved. The improved alignment accuracy may improve yield.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell according to an embodiment.
FIG. 2 is an exploded perspective view of a battery module according to an embodiment.
FIG. 3A is a perspective view of a flame-retardant sheet according to an embodiment. FIG. 3B is a front view of a flame-retardant sheet according to an embodiment. FIG. 3C is a perspective view of a flame-retardant sheet according to another embodiment.
FIGS. 4A and 4B are schematic diagrams of a process of manufacturing a battery module according to an embodiment.
FIG. 5 is a schematic diagram of a process of manufacturing a battery module according to another embodiment.
FIG. 6 is a flowchart of a method of attaching a flame-retardant sheet according to an embodiment.

### DETAILED DESCRIPTION

Features of the disclosed technology disclosed in this patent document are described by embodiments with reference to the accompanying drawings. However, the features are merely exemplary, and the disclosed technology is not limited to the specific embodiments described herein.

The terminologies or words used in the specification and claims described below should not be construed with common or dictionary meanings.

The disclosed technology can be implemented in some embodiments to provide a device and method for attaching a flame-retardant sheet.

FIG. 1 is a perspective view of a battery cell according to an embodiment.

Referring to FIG. 1, the battery cell 100 may include a pouch 110, an electrode assembly 120, and an electrode lead 130. The battery cell 100 may be a secondary battery. For example, the battery cell 100 may be a lithium-ion battery, but the disclosed technology is not limited thereto. For example, the battery cell 100 may be a nickel-cadmium electric battery, a nickel-metal hydride battery, or a nickel-hydrogen battery that is chargeable or dischargeable.

The pouch 110 may form at least a portion of an exterior of the battery cell 100. The pouch 110 may include an electrode accommodation portion 111 accommodating the electrode assembly 120, and a sealing portion 115 sealing at least a portion of a circumference of the electrode accommodation portion 111. The electrode accommodation portion 111 may provide a space in which the electrode assembly 120 and an electrolyte solution are accommodated.

The sealing portion 115 may be formed by bonding at least a portion of a circumference of the pouch 110. The sealing portion 115 may be in the form of a flange extending outwardly from the electrode accommodation portion 111 that is in the form of a container, and may be disposed along at least a portion of an exterior of the electrode accommodation portion 111. In an embodiment, the sealing portion 115 may include a first sealing portion 115a in which the electrode lead 130 is positioned, and a second sealing portion 115b in which the electrode lead 130 is not positioned. A portion of the electrode lead 130 may be withdrawn or exposed to the outside of the pouch 110. In a position in which the electrode lead 130 is withdrawn, in order to simultaneously increase a sealing degree of the first sealing portion 115a and ensure an electrical insulation state, the electrode lead 130 may be in a state of being covered by an insulating film 140. The insulating film 140 may be formed of a film material thinner than the electrode lead 130, and may be attached to opposite surfaces of the electrode lead 130.

In an embodiment, the electrode leads 130 may be disposed on opposite sides of the battery cell 100 in a longitudinal direction (Y-axis direction) to be oriented in opposite directions. For example, the electrode lead 130 may include a cathode lead 130a having a first polarity (for example, a cathode) toward one side of the battery cell 100 in the longitudinal direction, and an anode lead 130b having a second polarity (for example, an anode) toward the other side of the battery cell 100 in the longitudinal direction. In the embodiment illustrated in FIG. 1, the sealing portion 115 may include two first sealing portions 115a on which the electrode lead 130 is disposed, and one second sealing portion 115b on which the electrode lead 130 is not disposed.

A direction in which the electrode lead 130 is positioned may be selectively designed. In an embodiment (for example, FIG. 1), the electrode lead 130 may include a cathode lead 130a, and an anode lead 130b positioned in an opposite direction of the cathode lead 130a with respect to the electrode assembly 120. FIG. 1 illustrates that the electrode leads 130 are disposed on opposite sides of the battery cell 100 in the longitudinal direction (for example, a Y-axis direction) to be oriented in opposite directions, but a structure of the electrode leads 130 is not limited thereto. For example, the two electrode leads 130 may be disposed to be substantially parallel to each other in the longitudinal direction (for example, a Y-axis direction) of the battery cell 100.

The pouch 110 is not limited to having a structure in which a sealing portion 115 is formed on three surfaces obtained by folding one sheet of exterior material, as illustrated in FIG. 1.

In an embodiment of the disclosed technology, at least a portion of the sealing portion 115 may be in the form of being folded at least once. At least a portion of the sealing portion 115 may be folded, thereby improving bonding reliability of the sealing portion 115 and minimizing an area of the sealing portion 115. The second sealing portion 115b of the sealing portion 115 according to an embodiment, on which the electrode lead 130 is not disposed, may be folded twice and then fixed by an adhesive member 117. For example, the second sealing portion 115b may be folded by 180° along a first bending line C1 and then folded again along a second bending line C2. In this case, the second sealing portion 115b may be filled with an adhesive member 117.

An angle at which the second sealing portion 115b is bent or the number of times the second sealing portion 115b is bent may be changed. For example, in an embodiment (not illustrated), the second sealing portion 115b may be folded by 90° with respect to the first sealing portion 115a.

The electrode assembly 120 may include a cathode plate, an anode plate, and a separator. The separator may prevent contact between the cathode plate and the anode plate. It will be understood by those skilled in the art that electrode assembly 120 may be manufactured using various methods (for example, a multilayer type, a jelly-roll type, or a Z-fold type).

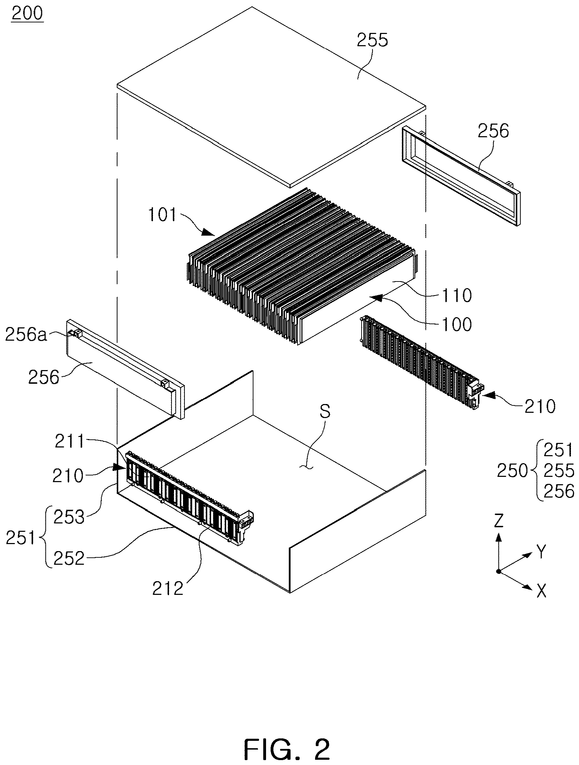

FIG. 2 is an exploded perspective view of a battery module according to an embodiment.

Referring to FIG. 2, a battery device 200 may include a cell assembly 101, a busbar assembly 210, and a case 250. The cell assembly 101 may include a plurality of battery cells 100. The description of the battery cell 100 in FIG. 1 may be applied to a battery cell 100 in FIG. 2. The battery device 200 in this patent document may be a battery module or a battery pack.

The cell assembly 101 may have a substantially hexahedral shape. In an embodiment, the cell assembly 101 may be referred to as a cell stack. In an embodiment, the cell assembly 101 may include a plurality of battery cells 100, connected to each other, using adhesive tape. According to an embodiment, the cell assembly 101 may include a plurality of battery cells 100, and at least one flame separation structure (not illustrated) disposed between at least some battery cells 100, among the plurality of battery cells 100.

The bus bar assembly 210 may include an electrically conductive bus bar 211 electrically connected to an electrode lead 130 of the battery cell 100, and a frame 212 supporting the bus bar 211. The frame 212 may be referred to as a support plate or busbar frame. The frame 212 may be formed of an electrically insulating material (for example, a polymer). At least a portion of the frame 212 may be disposed between the cell assembly 101 and the bus bar 211 to support the bus bar 211. The frame 212 may include at least one fastening hole for accommodating a coupling component (for example, a screw, a rivet, and/or a boss structure) . The frame 212 may be coupled to a portion (for example, an end plate 256) of the case 250 by the coupling component. A shape of the busbar assembly 210 illustrated in FIG. 2 may be selective. For example, a shape of the bus bar 211, included in the bus bar assembly 210, may be selectively changed.

The busbar assembly 210 may include at least one connection terminal for electrical connection to the outside. The electrode lead 130 of the battery cell 100 may be electrically connected to the outside of the battery device 200 through the bus bar 211 and the connection terminal. For example, the connection terminal may be connected to the bus bar 211 through an interconnection or conductive structure (not illustrated), and current of the battery cell 100 may pass through the bus bar 211 and the connection terminal 214 to be transmitted the outside of the battery device 200.

The case 250 may form an accommodation space S accommodating the cell assembly 101 and/or the busbar assembly 210. For example, the case 250 may include a cover 255 covering the cell assembly 101, and an accommodation portion 251 surrounding lower and side surfaces of the cell assembly 101. The accommodation portion 251 may include a main plate 252 covering the lower surface of the cell assembly 101, and a plurality of side wall members 253 covering at least a portion of the side surfaces of the cell assembly 101. At least a portion of the accommodation space S may be surrounded by the main plate 252, the side wall member 253, and the end plate 256. According to an embodiment, the main plate 252 and the side wall member 253 may be integrally formed.

The case 250 may include an end plate 256 covering a portion of the side surfaces of the cell assembly 101. In an embodiment, the end plate 256 may be connected to the main plate 252 and opposite ends of the side wall member 253 in the longitudinal direction (for example, a Y-axis direction) . The end plate 256 may cover a portion of the side surfaces of the cell assembly 101, and the busbar assembly 210. The end plate 256 may comprise a hole 256a accommodating the electrode lead 130.

According to an embodiment, the case 250 may be formed of a material having high thermal conductivity, such as metal. For example, the case 250 may be formed of aluminum. However, the material of the case 250 is not limited thereto. According to another embodiment, the case 250 may be formed of a polymer. The case 250 may be referred to as a housing, a module housing, or a module case.

A shape of the case 250 may be selectively designed. For example, at least a portion of a portion (for example, the accommodation portion 251, the cover 255, and/or the end plate 256) of the case 250 may have an inclined structure.

For ease of description, some components are omitted or exaggerated in this patent document. For example, the shape of the bus bar 211 and/or the number of battery cells 100 may be selectively designed. According to an embodiment not illustrated, the battery device 200 may include a conductive member (for example, a long bus bar) for adjusting a position of the connection terminal of the bus bar 211.

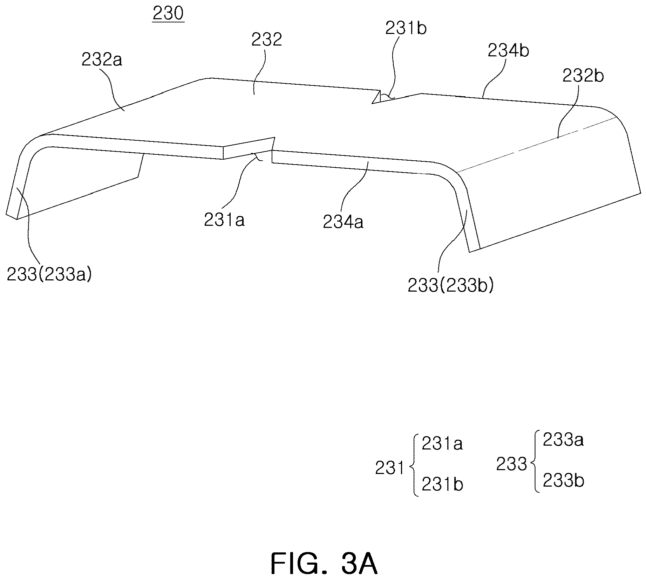

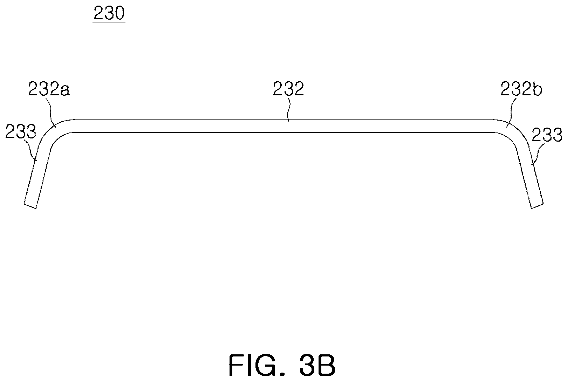

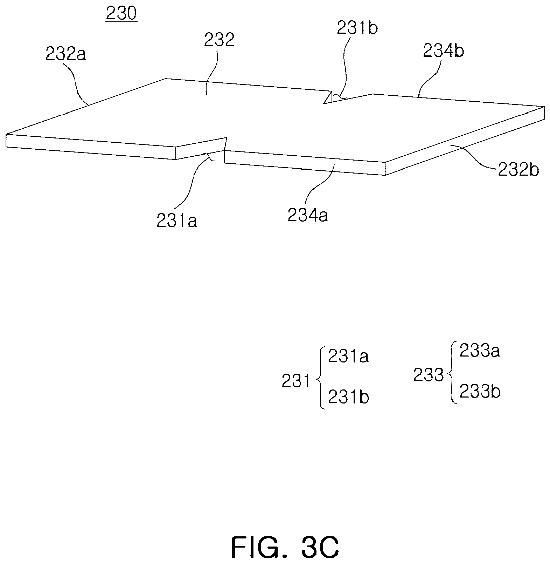

FIG. 3A is a perspective view of a flame-retardant sheet according to an embodiment. FIG. 3B is a front view of a flame-retardant sheet according to an embodiment. FIG. 3C is a perspective view of a flame-retardant sheet according to another embodiment.

Referring to FIGS. 3A, 3B, and/or 3C, a flame-retardant sheet 230 may include a cover portion 232, and a groove 231 formed in the cover portion 232.

According to an embodiment, the flame-retardant sheet 230 may be formed of a flame-retardant or fire-resistant material. For example, the flame-retardant sheet 230 may include mica. The flame-retardant sheet 230 may be referred to as a mica sheet. The flame-retardant sheet 230 may prevent or delay the transfer of flames. For example, the flame-retardant sheet 230 may reduce flames, heat, or gas transmitted from one battery module (for example, the battery device 200 in FIG. 2) to another battery module.

According to an embodiment, the flame-retardant sheet 230 may be disposed on the battery module (for example, the battery device 200 in FIG. 2). For example, in an embodiment, the flame-retardant sheet 230 may be attached to a cover (for example, the cover 255 in FIG. 2). In another embodiment, the flame-retardant sheet 230 may be attached to a cell assembly (for example, the cell assembly 101 in FIG. 2).

According to an embodiment (for example, FIGS. 3A and 3B), at least a portion of the flame-retardant sheet 230 may have a shape capable of covering an inclined or curved portion. For example, the at least a portion of the flame-retardant sheet 230 may have an inclined or curved shape. The flame-retardant sheet 230 may include a cover portion 232 covering an upper surface of the cover 255, and an inclined portion 233 extending from the cover portion 232. The cover portion 232 may have a substantially flat plate shape. The inclined portion 233 may extend from the cover portion 232 in a curved or inclined direction.

According to an embodiment, the cover portion 232 may comprise a first end 232a, and a second end 232b opposite to the first end 232a. The inclined portion 233 may include a first inclined portion 233a extending from the first end 232a, and a second inclined portion 233b extending from the second end 232b. The cover portion 232 may comprise side surfaces 234a and 234b extending from the first inclined portion 233a to the second inclined portion 233b. For example, the side surfaces 234a and 234b may include a first side surface 234a, and a second side surface 234b opposite to the first side surface 234a. In an embodiment, the first side surface 234a and the second side surface 234b may be oriented in a direction, substantially perpendicular to the ends 232a and 232b of the cover portion 232. In an embodiment, the first side surface 234a and the second side surface 234b may be referred to as a third end and a fourth end, respectively.

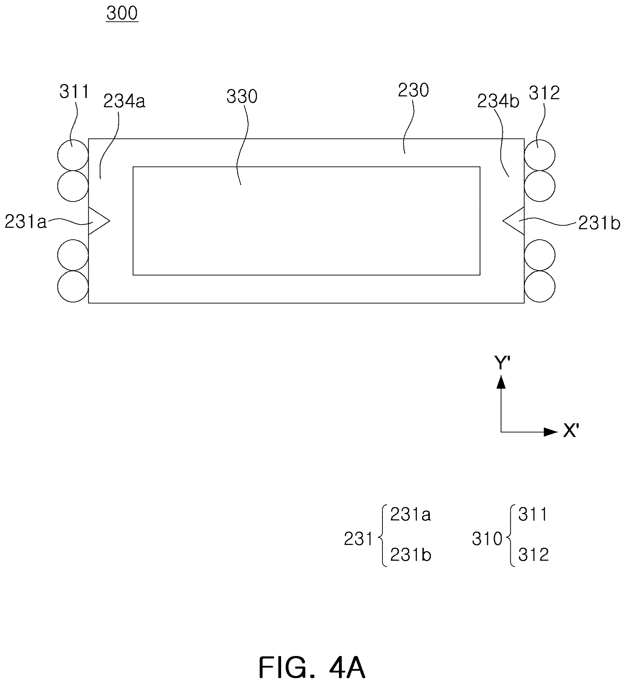

According to an embodiment, the flame-retardant sheet 230 may comprise at least one groove 231. The groove 231 may be formed in the side surfaces 234a and 234b of the flame-retardant sheet 230. For example, in an embodiment, the groove 231 may include a first groove 231a formed in the first side surface 234a, and a second groove 231b formed in the second side surface 234b. The groove 231 may accommodate a pressurizing device (for example, the second pressurizing device 320 in FIG. 4A) for attaching the flame-retardant sheet 230. In an embodiment, the groove 231 may have an inclined surface and/or a curved surface to be moved in a second direction, when the second pressurizing device 320 is inserted.

If the flame-retardant sheet 230 comprises a groove 231 for accommodating the first pressurizing device 310, a shape of the flame-retardant sheet 230 is not limited to a structure in which at least a portion of the flame-retardant sheet 230 is curved or inclined. For example, referring to an embodiment (for example, FIG. 3C), a flame-retardant sheet 230 having a flat plate shape may be provided. For example, the flame-retardant sheet 230 may not include the inclined portion 233 in FIGS. 3A and 3B.

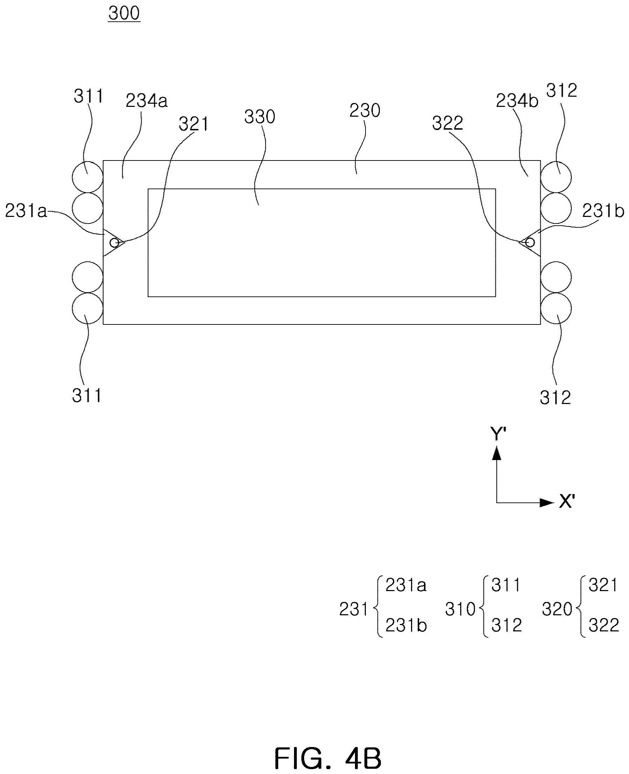

FIGS. 4A and 4B are schematic diagrams of a process of manufacturing a battery module according to an embodiment.

Referring to FIGS. 4A and/or 4B, a flame-retardant sheet attachment device 300 may include a first pressurizing device 310 and a second pressurizing device 320. The flame-retardant sheet attachment device 300 may be used to attach a flame-retardant sheet 230 to a battery module (for example, the battery device 200 in FIG. 2) . The description of the flame-retardant sheet 230 in FIGS. 3A to 3C may be applied to the flame-retardant sheet 230 in FIGS. 4A and 4B. The flame-retardant sheet attachment device 300 may be referred to as a flame-retardant sheet alignment device or a flame-retardant sheet attachment facility.

According to an embodiment, the flame-retardant sheet attachment device 300 may attach the flame-retardant sheet 230 to a surface having at least a portion that is inclined or curved. For example, the flame-retardant sheet attachment device 300 may attach the flame-retardant sheet 230 to an uneven surface using the pressurizing devices 310 and 320 having different structures.

According to an embodiment, the flame-retardant sheet attachment device 300 may include an unloading device 330 for positioning the flame-retardant sheet 230 on a designated component (for example, the case 250 of battery device 200) . In an embodiment, the unloading device 330 may include a suctioning pad (not illustrated) for positioning the flame-retardant sheet 230 on the battery device 200. After the flame-retardant sheet 230 is positioned on the designated component, the flame-retardant sheet attachment device 300 may adjust a position of the flame-retardant sheet 230 using the first pressurizing device 310 and the second pressurizing device 320. In an embodiment, the pressurizing devices 310 and 320 may be referred to as alignment devices or position adjustment devices.

According to an embodiment, the first pressurizing device 310 may move in a first direction (for example, an X'-direction). For example, the first pressurizing device 310 may move in the first direction to be in contact with side surfaces 234a and 234b of the flame-retardant sheet 230, and may provide pressure to the flame-retardant sheet 230. The first direction may be referred to as a longitudinal direction of the flame-retardant sheet 230.

According to an embodiment, the first pressurizing device 310 may align a position of the flame-retardant sheet 230 in the first direction. For example, the first pressurizing device 310 may adjust the position of the flame-retardant sheet 230 in the first direction while moving in a state of being in contact with opposite inclined portions 233 of the flame-retardant sheet 230.

According to an embodiment, the first pressurizing device 310 may include a first roller 311 configured to be in contact with the first side surface 234a, and a second roller 312 configured to be in contact with the second side surface 234b. According to an embodiment, the number of first pressurizing devices 310 may be selectively designed. For example, in this patent document, a structure in which the first roller 311 and the second roller 312 respectively include four rollers is illustrated, but the number of rollers 311 and 312 is not limited thereto.

According to an embodiment, when the flame-retardant sheet 230 moves in a second direction (for example, a Y'-direction), perpendicular to the first direction (X'-direction), the first pressurizing device 310 may not restrict the movement of the flame-retardant sheet 230 in the second direction. For example, the first pressurizing device 310 may have a shape for reducing a binding force or frictional force generated when the flame-retardant sheet 230 moves in the second direction. For example, when the flame-retardant sheet 230 moves in the second direction (Y'-direction), the first pressurizing device 310 may rotate. In an embodiment, the first pressurizing device 310 may be a cylindrical roller. At least a portion of the first pressurizing device 310 may have a spherical shape. For ease of description, a driving structure for moving the first pressurizing device 310 and the second pressurizing device 320 is omitted.

The shape of the first pressurizing device 310 may be selectively designed. For example, when the flame-retardant sheet 230 moves in the second direction (Y'-direction), the movement of the flame-retardant sheet 230 in the second direction (Y' -direction) may not be restricted. In this case, the shape of the first pressurizing device 310 is not limited to a roller. According to an embodiment, the second pressurizing device 320 may move in the first direction. For example, the second pressurizing device 320 may move in the first direction to be inserted into the groove 231 of the flame-retardant sheet 230. In an embodiment, the second pressurizing device 320 may include a first insertion portion 321 configured to be inserted into the first groove 231a, and a second insertion portion 322 configured to be inserted into the second groove 232a. According to an embodiment, the second pressurizing device 320 may be formed to have a shape corresponding to a shape of the groove 231. According to an embodiment, the pressurizing device 320 may be formed to have a cylindrical shape. For example, at least a portion of the first insertion portion 321 and the second insertion portion 322 may be formed to be curved.

According to an embodiment, the first pressurizing device 310 may include a plurality of rollers 311 and 312. The second pressurizing device 320 may be positioned between the plurality of rollers 311 and 312. For example, the first insertion portion 321 may be positioned between the plurality of first rollers 311, and the second insertion portion 322 may be positioned between the plurality of second rollers 312.

According to an embodiment, the second pressurizing device 320 may align a position of the flame-retardant sheet 230 in the second direction (Y'-direction). For example, based on a force provided by the second pressurizing device 320 to the groove 231, the flame-retardant sheet 230 may be moved in the second direction (Y'-direction). For example, the second pressurizing device 320 may move along the groove 231 of the flame-retardant sheet 230, such that the position of the flame-retardant sheet 230 may be slidably adjusted in the second direction. When the second pressurizing device 320 moves in the second direction, the position of the flame-retardant sheet 230 in the first direction may not be changed by the first pressurizing device 310. That is, the position of the flame-retardant sheet 230 in the second direction may be changed independently of the position of the flame-retardant sheet 230 in the first direction. The position of the flame-retardant sheet 230 in the first direction and the position of the flame-retardant sheet 230 in the second direction may be changed independently of each other, such that the flame-retardant sheet 230 may have increased position alignment accuracy. The second direction may be referred to as a width direction of the flame-retardant sheet 230.

The flame-retardant sheet attachment device 300 may include an attachment head (not illustrated) for attaching the flame-retardant sheet 230 to an object (for example, the battery device 200). The attachment head may attach the flame-retardant sheet 230 to the battery module after the first pressurizing device 310 and the second pressurizing device 320 are driven. For example, the flame-retardant sheet 230 may be aligned by the first pressurizing device 310 and the second pressurizing device 320 and then attached to the battery module. The attachment head may include a vacuum suctioning pad. However, a configuration of the attachment head is not limited thereto, and may be designed in various manners.

The object, attached by the flame-retardant sheet attachment device 300, is not limited to a flame-retardant sheet (for example, the flame-retardant sheet 230 in FIG. 3A) . For example, when the object has an inclined surface, the flame-retardant sheet attachment device 300 of this patent document may be applied. The flame-retardant sheet attachment device 300 may be referred to as an attachment device.

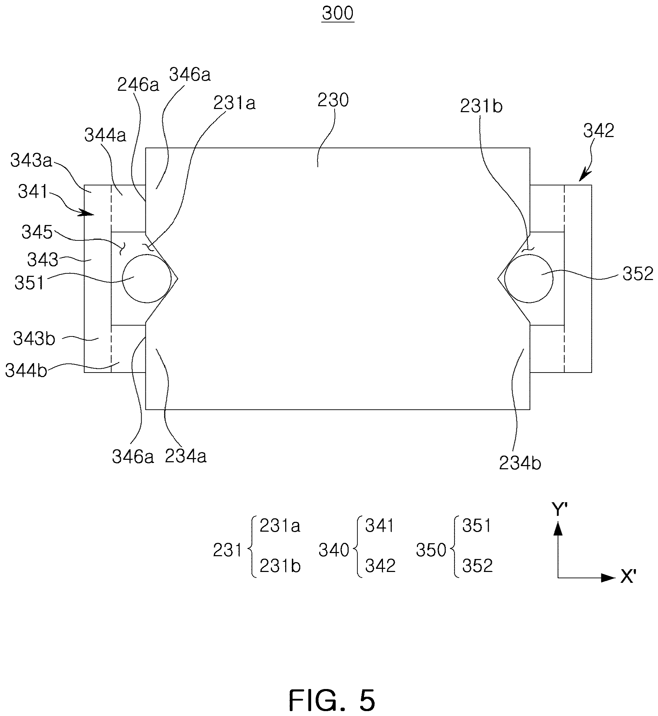

FIG. 5 is a schematic diagram of a process of manufacturing a battery module according to another embodiment.

Referring to FIG. 5, a flame-retardant sheet attachment device 300 may include a first pressurizing device 340 and a second pressurizing device 350. At least part of the description of the flame-retardant sheet 230, the flame-retardant sheet attachment device 300, the first pressurizing device 310, and the second pressurizing device 320 in FIGS. 4A and/or 4B may be applied to a flame-retardant sheet 230, the flame-retardant sheet attachment device 300, the first pressurization device 340, and the second pressurization device 350 in FIG. 5.

The first pressurizing device 340 may align a position of the flame-retardant sheet 230 in a first direction (X' -direction) . When the flame-retardant sheet 230 moves in a second direction (for example, Y'-direction), perpendicular to the first direction (X'-direction), the first pressurizing device 340 may not restrict the movement of the flame-retardant sheet 230 in the second direction.

According to an embodiment, the first pressurizing device 340 may be in contact with opposite side surfaces of the flame-retardant sheet 230. For example, the first pressurizing device 340 may include a first pressurizing object 341 and a second pressurizing object 342 configured to be in contact with a first side surface 234a of the flame-retardant sheet 230. The first pressurizing object 341 may be formed to be symmetrical to the second pressurizing object 342.

According to an embodiment, a shape of the first pressurizing device 340 may be selectively designed. For example, the first pressurizing device 340 may have a polyhedral shape (for example, a rectangular parallelepiped shape). The first pressurizing device 340 may be formed of a material having a coefficient of friction to reduce movement restrictions of the flame-retardant sheet 230.

According to an embodiment, the first pressurizing device 340 may have a shape for providing pressure to the flame-retardant sheet 230. For example, the first pressurizing device 340 may include a support plate 343 and pressurizing portions 344a and 344b protruding from opposite ends 343a and 343b of the support plate 343. The pressurizing portions 344a and 344b may have pressurizing surfaces 346a and 346b configured to provide pressure by contact with the flame-retardant sheet 230. According to an embodiment, at least a portion of the pressurizing portions 344a and 344b may have a polyhedral shape or a rectangular parallelepiped shape. According to an embodiment, the pressurizing portions 344a and 344b may have an inclined surface corresponding to an inclined portion of the flame-retardant sheet 230 (for example, the inclined portion 233 in FIG. 3B).

According to an embodiment, the first pressurizing device 340 may have a shape for avoiding interference with the second pressurizing device 350. For example, the first pressurizing device 340 may include an accommodation recess 345 configured to accommodate the second pressurizing device 350. The accommodation recess 345 may be defined by the support plate 343 and the pressurizing portions 344a and 344b. For example, at least a portion of the accommodation recess 345 may be surrounded by the support plate 343 and the pressurizing portions 344a and 344b.

According to an embodiment, the second pressurizing device 350 may move in the first direction. For example, the second pressurizing device 320 may move in the first direction to be inserted into a groove 231 of the flame-retardant sheet 230. For example, the second pressurizing device 350 may include a first insertion portion 351 configured to be inserted into a first groove 231a, and a second insertion portion 352 configured to be inserted into a second groove 231b. The second pressurizing device 350 may align a position of the flame-retardant sheet 230 in the second direction. For example, while at least a portion of the second pressurizing device 350 is inserted into the groove 231, the flame-retardant sheet 230 may move in the second direction. At least a portion of the second pressurizing device 350 may be positioned between the pressurizing portions 344a and 344b.

A shape of the second pressurizing device 350 may be selectively designed. According to an embodiment (not illustrated), the shape of the second pressurizing device 350 may be substantially the same as the shape of the second pressurizing device 320 illustrated in FIG. 4B.

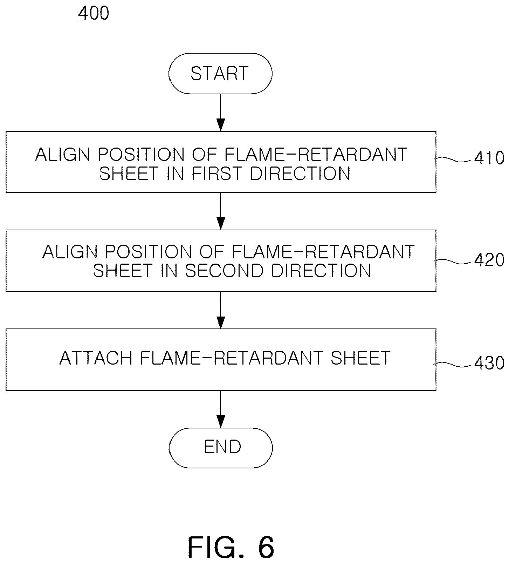

FIG. 6 is a flowchart of a method of attaching a flame-retardant sheet according to an embodiment.

Referring to FIG. 6, a flame-retardant sheet attachment method 400 may include a process 410 of aligning a position of a flame-retardant sheet in a first direction, a process 420 of aligning a position of the flame-retardant sheet in a second direction, and a process 430 of attaching the flame-retardant sheet. The flame-retardant sheet attachment method 400 may be performed using the flame-retardant sheet attachment device 300 in FIGS. 4A and 4B for attaching the flame-retardant sheet 230 in FIGS. 3A and 3B.

According to an embodiment, the flame-retardant sheet attachment method 400 may include a process of unloading the flame-retardant sheet 230. The unloading process may be a process of approximately positioning the flame-retardant sheet 230 in an attachment location (for example, the top of the battery module) using an unloading device 330.

The process 410 may be performed using a first pressurizing device (for example, the first pressurizing device 310 in FIGS. 4A and 4B or the first pressurizing device 340 in FIG. 5). For example, the process 410 may include an operation of allowing the first pressurizing device 310 to be in contact with side surfaces (for example, the side surfaces 234a and 234b in FIG. 3A) of the flame-retardant sheet 230. The first pressurizing device 310 may provide pressure to the side surfaces 234a and 234b in the first direction to adjust the position of the flame-retardant sheet 230 in the first direction. The process 410 of aligning the position of the flame-retardant sheet 230 in the first direction may be referred to as a first alignment process.

The process 420 may be performed using a second pressurizing device (for example, the second pressurizing device 320 in FIG. 4B or the second pressurizing device 350 in FIG. 5). For example, the process 420 may include an insertion operation of moving the second pressurizing device 320 in the first direction and inserting the second pressurizing device 320 into the groove 231 of the flame-retardant sheet 230, and a sliding operation in which the flame-retardant sheet 230 is moved in the second direction by the second pressurizing device 320. The sliding operation may be performed in a state in which the first pressurizing device 310 is in contact with the flame-retardant sheet 230. The movement of the flame-retardant sheet 230 in the first direction may be prevented by the first pressurizing device 310 during the rolling operation. According to an embodiment, the first pressurizing device 310 may rotate during the sliding operation. According to another embodiment, the flame-retardant sheet 230 may slide with respect to the first pressurizing device 310 during the sliding operation. By the rotation of the first pressurizing device 310, the movement of the flame-retardant sheet 230 in the first direction and the movement of the flame-retardant sheet 230 in the second direction may be performed independently of each other, and a difficulty level of attaching the flame-retardant sheet 230 may be reduced. The process 420 may be referred to as a second alignment process.

The process 430 of attaching the flame-retardant sheet 230 may include an operation of attaching, to an object (for example, a battery module), the flame-retardant sheet 230 that is in a position adjusted using the process 410 and the process 420. According to an embodiment, the process 430 may be performed using an attachment head (not illustrated) configured to provide pressure to a cover portion (for example, the cover portion 232 in FIG. 3A) of the flame-retardant sheet 230.

The features described above are merely examples of the application of the principles of the disclosed technology, and other components may be included without departing from the scope of the disclosed technology.

Only specific examples of implementations of certain embodiments are described. Variations, improvements and enhancements of the disclosed embodiments and other embodiments may be made based on the disclosure of this patent document.

## Claims

1. A flame-retardant sheet attaching device comprising:
a first pressurizing device configured to move in a first direction and apply pressure to a flame-retardant sheet; and
a second pressurizing device configured to move in the first direction, the second pressurizing device having at least a portion inserted into a groove of the flame-retardant sheet,
wherein the flame-retardant sheet is configured to move, based on the movement of the second pressurizing device, in a second direction, perpendicular to the first direction, and
the first pressurizing device is configured to restrict the movement of the flame-retardant sheet in the first direction, when the flame-retardant sheet moves in the second direction.

2. The flame-retardant sheet attaching device of claim 1, wherein
the first pressurizing device is formed to have a roller or spherical shape, and
the first pressurizing device is configured to rotate, when the flame-retardant sheet moves in the second direction.

3. The flame-retardant sheet attaching device of claims 1 or 2, wherein
the flame-retardant sheet includes a cover portion having a first end and a second end opposite to the first end, a first inclined portion extending from the first end, and a second inclined portion extending from the second end,
the cover portion comprises a first side surface extending from the first inclined portion to the second inclined portion, and a second side surface extending from the first inclined portion to the second inclined portion, the second side surface opposite to the first side surface, and
the roller includes a first roller configured to be in contact with the first side surface, and a second roller configured to be in contact with the second side surface.

4. The flame-retardant sheet attaching device of claim 3, wherein
the groove includes a first groove formed in the first side surface, and a second groove formed in the second side surface, and
the second pressurizing device includes a first insertion portion configured to be inserted into the first groove, and a second insertion portion configured to be inserted into the second groove.

5. The flame-retardant sheet attaching device of claim 4, wherein
the first roller includes a plurality of first rollers, and the second roller includes a plurality of second rollers, and
the first insertion portion is positioned between the plurality of first rollers, and the second insertion portion is positioned between the plurality of second rollers.

6. The flame-retardant sheet attaching device of any one of preceding claims, wherein
the first pressurizing device includes a support plate, and pressurizing portions protruding from opposite ends of the support plate, and
the pressurizing portions comprise a pressurizing surface configured to pressurize the flame-retardant sheet.

7. The flame-retardant sheet attaching device of claim 6, wherein the first pressurizing device includes an accommodation recess at least partially surrounded by the support plate and the pressurizing portions, the accommodation recess configured to accommodate the second pressurizing device.

8. The flame-retardant sheet attaching device of any one of preceding claims, further comprising:
an unloading device configured to position the flame-retardant sheet on an upper portion of a battery module.

9. The flame-retardant sheet attaching device of any one of preceding claims, further comprising:
an attachment head configured to attach the flame-retardant sheet to a battery module, after the first pressurizing device and the second pressurizing device are driven.

10. The flame-retardant sheet attaching device of any one of preceding claims, wherein
the first pressurizing device is configured to align a position of the flame-retardant sheet in the first direction, and
the second pressurizing device is configured to align a position of the flame-retardant sheet in the second direction.

11. A flame-retardant sheet attaching method comprising:
a first alignment process of aligning a position of a flame-retardant sheet in a first direction using a first pressurizing device;
a second alignment process of aligning a position of the flame-retardant sheet in a second direction, perpendicular to the first direction, using a second pressurizing device; and
an attachment process of attaching the flame-retardant sheet to a battery module.

12. The flame-retardant sheet attaching method of claim 11, wherein the first alignment process includes an operation of allowing the first pressurizing device to be in contact with a side surface of the flame-retardant sheet and providing pressure to the flame-retardant sheet in the first direction.

13. The flame-retardant sheet attaching method of claims 11 or 12, wherein the second alignment process includes an insertion operation of moving the second pressurizing device in the first direction and inserting the second pressurizing device into a groove of the flame-retardant sheet.

14. The flame-retardant sheet attaching method of claim 13, wherein the second alignment process includes a sliding operation in which the flame-retardant sheet is moved in the second direction, based on a force of the second pressurizing device provided in the groove.

15. The flame-retardant sheet attaching method of claim 14, wherein the first pressurizing device is configured to restrict the movement of the flame-retardant sheet in the first direction, when the flame-retardant sheet moves in the second direction.
